# EUROPEAN PATENT SPECIFICATION

(11) **EP 1 598 571 B1**
(45) Date of publication and mention of the grant of the patent: **28.04.2010**
(21) Application number: 04425354.0
(22) Date of filing: 18.05.2004
(51) Int. Cl.: F16D 43/18, A01D 46/26

(54) **Portable apparatus for shaking fruit trees, particularly olive trees**
Tragbares Gerät zum Schütteln von Obstbäumen, insbesondere Olivenbäumen
Appareil portable pour secouer des arbres fruitiers, particulièrement des oliviers

(43) Date of publication of application: 23.11.2005
(73) Proprietor: Cifarelli S.p.A., 27058 Voghera (Pavia) (IT)
(72) Inventor: Cifarelli, Raffaele, 27058 Voghera (Pavia) (IT)
(74) Representative: Ferreccio, Rinaldo

(56) References cited:
- EP-A- 1 098 100
- US-A- 1 946 824
- US-A- 2 703 163
- US-A- 3 338 361
- US-A- 5 503 261
- US-A- 6 000 519

## Description

### Field of application

The present invention relates, in its more general aspect, to a portable apparatus for shaking fruit trees, particularly olive trees.

More particularly the present invention relates to a portable apparatus for shaking a fruit tree, in particular an olive tree, of the type comprising a body, intended to be embraced, a rod being axially movable with respect to the body, for shaking a branch, a motor housed in the body and having a driving shaft connected by means of a centrifugal clutch with an alternative mechanism for controlling the rod, the centrifugal clutch comprising a disk associated with the deriving shaft, a bell-like body associated with the alternative mechanism and at least an elongated, arcuate mass having one end being hinged to a pivot associated with the disk and annularly movable around said pivot under the action of the centrifugal force against the contract of elastic means, so as to be movable in a substantially radial direction towards and from said bell-like body.

As it is known, there exists the need of a mechanical pickling up of fruit. In fact, both the manual picking up from the tree and the one obtained by shaking the tree with poles, imply a waste of time and labour which is no longer acceptable, especially in the case of fruit of small size, as the case of olives.

In order to satisfy the above need, apparatuses of the above specified type are known for example from EP-A-1 098 100 and. US-A-1,946,824, on which the preamble of claim 1 is based. These apparatuses, although being advantageous under several aspects and being widely used, have however a well known drawback. In fact, during their operative life, they are faced with occasional breaks, obviously due to the severe mechanical stresses induced by the alternative motion, and consequently with halts for the substitution of the broken part with the relevant, spare part. Up to now this drawback has been forcedly accepted, also because the generic suggestion of a generalised strengthening of the apparatus would lead to a weighting thereof, maybe worse drawback, for an embracing apparatus. On the other hand, the suggestion of proving a sort of cage fixed to the pivots and facing the masses has proved to be a modest palliative, besides representing a constructive complication which neither pays for it.

The problem underlying the present invention is that of devising an apparatus of the specified type, which meets the above need, simultaneously overcoming the drawback cited with reference to the prior art.

This problem is solved by an apparatus of the specified type which is characterised in that it comprises a mushroom-like element associated with the disk and placed in correspondence with an opposite end of the mass, said mushroom-like element having a stem extended parallelly to the pivot and a head acting as axial shoulder for the mass.

Further characteristics and advantages of the apparatus according to the present invention will be apparent from the following description of a preferred embodiment thereof, given by way of indicative and nonlimiting example with reference to the annexed drawings.

### Description of the drawings

Figure 1 shows a schematic, perspective view of an apparatus according to the invention;

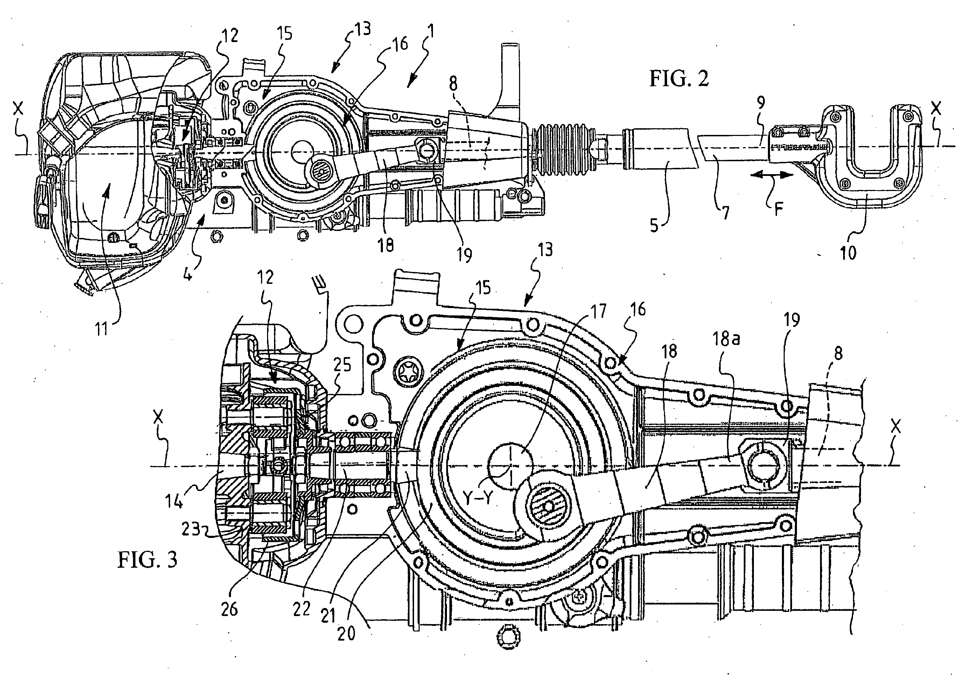

Figure 2 shows a front view of the apparatus of figure 1, in a partial longitudinal section;
Figure 3 shows an enlarged, front, longitudinal section view of a detail of the apparatus of figure 2;
Figures 4, 5 and 6 show schematic cross views, further enlarged, of a detail of the apparatus of figure 2, made in different operating steps thereof;
Figure 7 shows a schematic, section view of the detail of figure 4, made according to the line VII-VII; and
Figure 8 shows a perspective view of a detail of the apparatus of figure 2.

### Detailed description of the invention

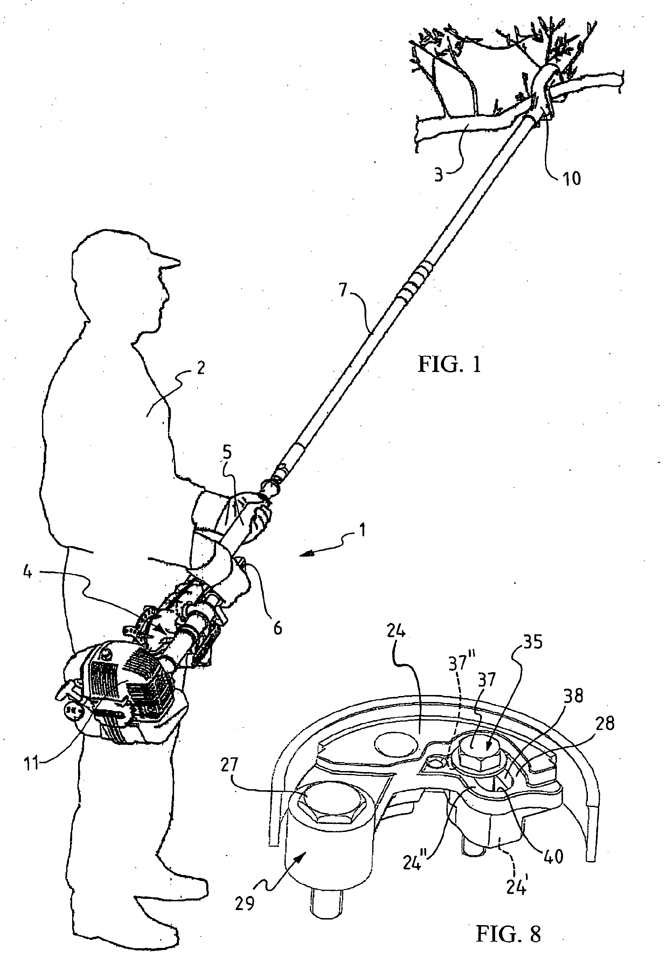

With reference to the drawings, 1 globally indicates a portable apparatus for shaking a fruit tree according to the invention. The apparatus 1 is represented in figure 1 as embraced by an employed worker 2, during the shaking of a fruit tree, in particular of an olive tree, represented as limited to a branch 3 thereof.

The apparatus 1 comprises a body 4, of globally elongated shape according to a longitudinal axis X-X. The body 4 is provided with two handgrips 5 and 6, cushioned, thanks to which it can be embraced by the employed worker 2. The handgrip 5 is extended coaxially to the axis X-X, whereas the handgrip 6 is extended parallelly to the handgrip 5 in a predetermined spaced relation sufficient to give stable grip of the body 4. The apparatus 1 comprises a rod 7, long, stiff and light, whose axis coincides with the axis X-X.

The rod 7 has one end 8 mounted in the body 4 in a movably guided way and an opposite free end 9 provided with a hook 10, substantially U-shaped with wings of the U being extended perpendicularly to the axis X-X for the grip of the branch 3.

The rod 7 is axially movable with alternate motion with respect to the body 4, with a to-and-fro motion along the axis X-X, as indicated by the double arrow F, for shaking the branch 3.

For controlling the rod 7 according to the desired alternate motion, the apparatus 1 comprises a motor 11, a centrifugal clutch 12 and an alternative mechanism 13. All these three members are elongated inside the body 4.

The motor 11 is of the internal combustion type and it comprises a driving shaft 14 extended according to the axis X-X. The motor 11 is complete of everything it needs for operating in the field, starting by the fuel thank, and it is of the type suitable for operating regularly, an any direction it is oriented by the employed worker during the shaking of the tree.

The alternative mechanism 13 comprises a reduction gear 15 and a link-and-crank mechanism 16.

In particular, the rod-and-crank mechanism 16 comprises a crankshaft-17, having axis Y-Y being extended perpendicularly to the axis XX. and a link 18. The link 18 has one end 18a being hinged in a clevis 19 which is integral with the end 8 of the rod 7. The reduction gear 15 comprises a pair of gear wheels and in particular a bevel gear 20 of large diameter, keyed on the crankshaft 17 and a bevel gear or pinion gear 21 of small diameter. The opinion gear 21 is integral in rotation with a shaft 22 being rotably supported in the body 4 along the axis X-X. It is easy to note that, thanks to the reduction ratio of the reduction gear, which is valid in the examples 1-5, the steady rod performs a complete to-and-fro shift, in accordance with the desired to-and-fro motion, each five rotations of the driving shaft.

The centrifugal clutch 12, which is placed in the housing 4 coaxially to the axis X-X between the motor 11 and the reduction gear 15 of the alternative mechanism 13, comprises a disk 23 provided with two opposite eccentric masses, both indicated with 24, and a bell-like body 25, having a cylindrical, peripheral band 26, of predetermined internal radius.

The disk 23 is keyed on the shaft 14 of the motor 11, whereas the bell-like body 25 is keyed on the shaft 22 of the reduction gear 15.

Each mass 24 is elongated and it is shaped substantially according to an arc of circle, with an extrados 24a, having radius substantially equal to the radius of the cylindrical band 26, and with an intrados 24b. Each mass 24 is placed along the periphery of the disk 23, the one diametrally opposed to the other. In particular each mass 24 has opposite ends 27 and 28. While the end 28 is free, the end 27 of the mass is hinged to a pivot, globally indicated with 29, of axis A-A parallel to the axis X-X, fixed to the disk 23 near the periphery thereof on the side of a face thereof 23' facing the bell-like body 25. Each mass 24 has opposite axial faces 24' and 24", the axial face 24' facing the face 23' of the disk 23. Each mass 24 is angularly movable around the pivot 29, so as to perform substantially radial shifts moving near and away towards and from the cylindrical band 26. The moving near shift towards the band occurs under the effect of the centrifugal force, when the motor is started. This shift occurs against the contrast of elastic means 30, which constantly stimulate the mass moving away from the band.

In the example, the elastic means 30 are made of a spring 31, diametrally extended, and having opposite ends, both indicated with 32, each hooked to a respective mass 24 in correspondence with a respective eyelet 33 placed in an intermediate point 34 of each mass between the two ends 27 and 28. This spring 31 constantly stimulates the two masses in a radial direction and in mutual approaching.

According to the present invention, the apparatus 1 comprises a substantially mushroom-like element, globally indicated with 35, which has axis B-B parallel to the axis X-X and it is fixed to the disk 23, on the part of the face 23', in correspondence with the free end 28 of each mass 24. Said mushroom-like element 35 has a stem 36 and a head 37, which has a shoulder 37" facing the axial face 24" and placed so that the mass 23 is axially retained between the face 23' and the shoulder 37" with limited clearance, for example a few tenths of millimeter. The mushroom-like element 35 thus acts as axial shoulder for the mass.

It is to be noted that in correspondence with the free end 28 of the mass a slot 38 id provided, made in the mass and slightly arcuate with centre on the axis A-A, of predetermined, limited width. The slot 38 has one end 39 on the side of the extrados 24a and one end 40 on the side of the intrados 24b, said slot 38 being crossed by the stem 36 of the mushroom-like element 35. Said ends 39 and 40 of the slot 38 act as stroke end halts of the mass in the angular shifts respectively inwards, caused by the spring 31, and outwards, caused by the centrifugal force.

The ends 39 and 40 are placed in such a limited, predetermined, spaced relation as to limit the angular shift of the mass around the pivot. It is to be noted that the halt of the end 40 against the stem 36 only occurs in the undesired case of a possible, unintentional starting of the motor made when the bell is removed, for example while the apparatus is being assembled, or however when the apparatus is partially disassembled.

In particular, the pivot 29 is made of a bolt 41, of axis A-A, strong enough to transmit the torque from the motor to the alternative mechanism. The bolt 41 is screwed in the disk 23 and it has a stem 42 which is keyed on a washer 43, which defines the face 23' of the disk 23. The mass 24 is rotary around the stem 42, the mass having a sleeve 44. The bolt 41 comprises a head 45, which defines a shoulder 45" facing the axial face 24". The mass 24 is axially retained between the face 23' and the shoulder 45" with limited clearance, of a few tenths of millimeter.

Advantageously, the mushroom-like element 35 is made of a bolt 46, of axis B-B, of small size, for example of the 6MA type, being screwed in the disk 23 and having a head 47 keyed on a washer 48, on a sleeve 49 and on a washer 50. The washer 50 defines the face 23' of the disk, whereas the washer 48 defines the above shoulder 37". Advantageously, the washers 48 and 50 have raise diameter and they are made of an antifriction and shock-resistant material, for example hardened steel. The sleeve 49 acts as angular stroke end halt against which the ends 39 and 40 of the slot 38 abut.

The operation is hereafter described.

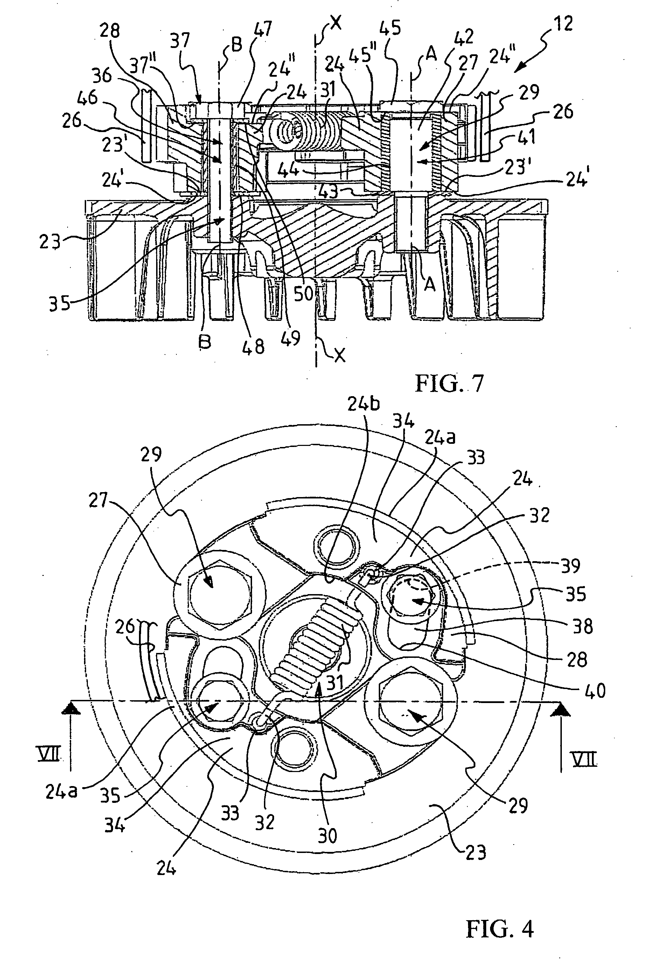

With reference to a starting condition of still apparatus (fig. 4 and 7) the masses are at rest, retained by the spring with the end of extrados 39 of the slot 38 being halted against the stem 36 of the mushroom-like element and in practice against the spacing sleeve 49.

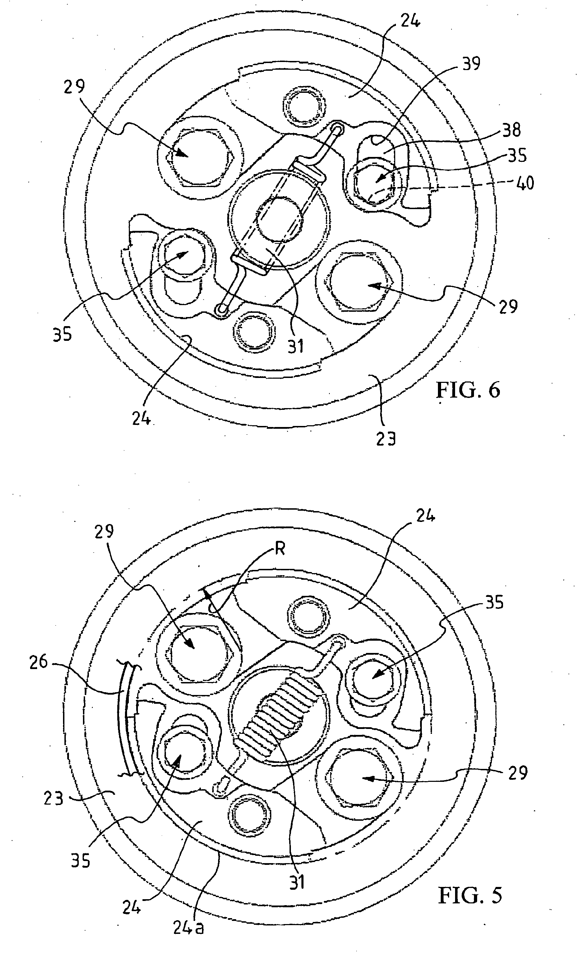

When starting the motor the centrifugal force stimulates the masses towards the cylindrical band of the bell and it puts them into contact pressing against it, making it rotate. As effect of the alternative mechanism the alternative movement of the rod with respect to the body starts (fig. 5). Oppositely to the respective weights, an alternative movements also for the body starts by reaction to the alternative movement of the rod, although of inferior width, being the body heavier than the rod. This alternative movement stimulates the masses with an alternate force, also axial. The mass reacts to this force for the engagement and the leaning of the faces 24' and 24" thereof alternatively against the face 23' and against the shoulders 27" and 45", in correspondence with the free end 28 and with the hinged end 27 respectively. In other words each mass, axially stimulated by alternated inertial forces, fins a suitable reaction in the leaning of the axial faces thereof aternatively against the face of the disk and against the shoulders of the pivot and of the mushroom-like element, being active at the ends thereof respectively hinged and free.

In the case (fig. 6) where the motor is unintentionally started when the apparatus is being assembled or reconditioned, for example being the bell-like body removed, the masses stimulated outwards by the centrifugal force are retained by the engagement of the intrados 40 end of the slot 38 against the stem 36 of the mushroom-like element 35,and in practice against the spacing sleeve 49. In this way the masses, under the effect of the centrifugal force, only perform a limited angular shift outwards, and they thus rotate almost preserving the starting position thereof, instead of going and finding a place almost radially and thus rotating on a far larger diameter, with evident danger of injuries for the employed worker.

The main advantage of the apparatus according to the present invention stays in the reliability thereof. In fact, it is ensured by the integrity of the masses of the centrifugal force against the effects of the alternated axial movement on the masses themselves, thanks to the fact that the inertial forces are efficiently opposed exactly where they are more burdensome, i.e. in correspondence with the free ends, far from the pivot. In other words for the apparatus according to the invention an impeccable and long operative life is to be expected.

A further important advantage of the apparatus according to the invention stays in that the desired lightness of the apparatus is kept. In fact the added parts are very light per sé thanks to the efficiency of the placement thereof.

It is then to be noted that the apparatus according to the invention is structurally simple, availing themselves of added parts of surprising simplicity, not last advantage for an apparatus which must be manufactured in series.

At last, the apparatus according to the invention is advantageous as regards safety against injuries.

Obviously, a technician in the field, in order to meet contingent and specific needs, can bring several changes and variations to the above described and shown apparatus, all within the scope of the invention as defined by the following claims.

## Claims

1. Portable apparatus for shaking a fruit tree, in particular an olive tree, of the type compiling a body (4), intended to be embraced, a rod (7) axially movable with respect to the body (4) by means of an alternative mechanism (13), for shaking a branch, a motor (11) housed in the body (4) and having a driving shaft (14) connected by means of a centrifugal clutch (12) with the alternative mechanism (13) for controlling the rod (7), the centrifugal clutch (12) comprising a disk (23) associated with the driving shaft (14), a bell-like body (25) associated with the alternative mechanism (13) and at least one elongated, arcuate mass (24) having one end (27) being hinged to a pivot (29) associated with the disk (23) and angularly movable around said pivot (29) under the action of the centrifugal force against the contrast of elastic means (30), so as to be movable in a substantially radial direction towards and from said bell-like body (25), **characterised in that** it comprises a mushroom-like element (35) associated with the disk (23) and placed in correspondance with an opposite end (28) of the mass (24), said mushroom-like element (35) having a stem (36) extended parallelly to the pivot (29) and a head (37) acting as axial shoulder (37") for the mass (24).

2. Apparatus according to claim 1, **characterised in that** it comprises a slot (38) formed in correspondance with said opposite end (28) of the mass (24), crossed by said stem (36).

3. Apparatus according to claim 2, **characterised in that** said slot (38) has opposite ends (39, 40) in such predetermimed spaced relation as to delimit the angular shift of the mass (24).

4. Apparatus according to claim 3, **characterised in that** said slot (38) has one end (40) acting as stroke end host of the angular shift of the mass (24) under the action of the centrifugal force.

5. Apparatus according to claim 4, **characterised in that** said slot (38) has one end (39) acting as stroke end bart of the angular shift of the mass (24) under the action of the elastic means (30).

6. Apparatus according to claim 1, **characterised in that** said mushroom-like element (35) is made of a bolt (46) having a head (47) and being tightened on a spacing sleeve (49).

7. Apparatus according to claim 6, **characterised in that** said mushroom-like element (35) comprises a washer (48) of a predetermined raised diameter being tightened between the head of the bolt (46) and the spacing sleeve (49), wherein the washer (48) defines a face (23') of the disk (23).

8. Apparatus according to claim 7, **characterised in that** said mushroom-like element (35) comprises another washer (50) defining said axial shoulder (37").

9. Apparatus according to claim 8, **characterised in that** said washers (48, 50) are made of an antifriction and shock-resistant material.

## Patentansprüche

1. Tragbare Vorrichtung zum Schütteln eines fruchttragenden Baumes, insbesondere eines Olivenbaums, von der Bauart, die einen Körper (4) aufweist, der dazu gedacht ist, ergriffen zu werden, einen Stab (7), der mittels eines alternierenden Mechanismus (13) in Bezug auf den Körper (4) axial bewegbar ist, um einen Zweig zu schütteln, einen Motor (11), der im Körper (4) untergebracht ist und eine Antriebswelle (14) hat, die durch eine Fliehkraftkupplung (12) mit dem alternierenden Mechanismus (13) verbunden ist, um den Stab (7) anzusteuern, wobei die Fliehkraftkupplung (12) eine Scheibe (23), die der Antriebswelle (14) zugeordnet ist, einen glockenartigen Körper (25), der dem alternierenden Mechanismus (13) zugeordnet ist, und zumindest einen länglichen, bogenförmigen Massekörper (24) aufweist, der mit einem Ende (27) an einem der Scheibe (23) zugeordneten Lagerzapfen (29) angelenkt und unter der Wirkung der Fliehkraft gegen die Rückstellkraft eines elastischen Mittels (30) um den Lagerzapfen (29) schwenkbeweglich ist, um in einer im Wesentlichen radialen Richtung zum glockenartigen Körper (25) hin bzw. von diesem weg bewegbar zu sein, **dadurch gekennzeichnet, dass** sie ein pilzartiges Element (35) umfasst, welches der Scheibe (23) zugeordnet und in Entsprechung mit einem entgegengesetzten Ende (28) des Massekörpers (24) angeordnet ist, wobei das pilzartige Element (35) einen Schaft (36), der sich parallel zum Lagerzapfen (29) erstreckt, und einen Kopf (37) aufweist, der als axiale Schulter (37") für den Massekörper (24) wirkt.

2. Vorrichtung nach Anspruch 1, **dadurch gekennzeichnet, dass** sie eine Ausnehmung (38) aufweist, die in Entsprechung mit dem entgegengesetzten Ende (28) des Massekörpers (24) ausgebildet ist und von dem Schaft (36) durchquert wird.

3. Vorrichtung nach Anspruch 2, **dadurch gekennzeichnet, dass** die Ausnehmung (38) entgegengesetzte Enden (39, 40) in solch einem
vorbestimmten Abstandsverhältnis hat, dass die Winkelverlagerung des Massekörpers (24) begrenzt ist.

4. Vorrichtung nach Anspruch 3, **dadurch gekennzeichnet, dass** die Ausnehmung (38) ein Ende (40) hat, das als Bewegungsendanschlag der unter der Wirkung der Fliehkraft stattfindenden Winkelverlagerung des Massekörpers (24) wirkt.

5. Vorrichtung nach Anspruch 4, **dadurch gekennzeichnet, dass** die Ausnehmung (38) ein Ende (39) hat, das als Bewegungsendanschlag der unter der Wirkung des elastischen Mittels (30) stattfindenden Winkelverlagerung des Massekörpers (24) wirkt.

6. Vorrichtung nach Anspruch 1, **dadurch gekennzeichnet, dass** das pilzartige Element (35) aus einer Schraube (46) besteht, die einen Kopf (47) hat und an einer Abstandshülse (49) festgezogen wird.

7. Vorrichtung nach Anspruch 6, **dadurch gekennzeichnet, dass** das pilzartige Element (35) eine Beilagscheibe (48) mit vorbestimmtem erhöhtem Durchmesser hat, die zwischen dem Kopf der Schraube (46) und der Abstandshülse (49) festgezogen wird, wobei die Beilagscheibe (48) eine Anlagefläche (23') der Scheibe (23) bildet.

8. Vorrichtung nach Anspruch 7, **dadurch gekennzeichnet, dass** das pilzartige Element (35) eine weitere Beilagscheibe (50) umfasst, die die axiale Schulter (37") bildet.

9. Vorrichtung nach Anspruch 8, **dadurch gekennzeichnet, dass** die Beilagscheiben (48, 50) aus einem reibungsarmen und schlagfesten Material bestehen.

## Revendications

1. Appareil portable destiné à secouer un arbre fruitier, en particulier un olivier, du type comportant un corps (4), prévu pour être saisi, un tube (7) mobile dans le sens axial par rapport au corps (4) par le biais d'un mécanisme alternatif (13), pour secouer une branche, un moteur (11) logé dans le corps (4) et ayant un arbre de commande (14) relié par le biais d'un embrayage centrifuge (12) au mécanisme alternatif (13) pour commander le tube (7), l'embrayage centrifuge (12) comportant un disque (23) associé à l'arbre de commande (14), un corps en forme de cloche (25) associé au mécanisme alternatif (13) et au moins une masse arquée allongée (24) ayant une extrémité (27) en articulation par rapport à un pivot (29) associé au disque (23) et angulairement mobile autour dudit pivot (29) sous l'action de la force centrifuge contre le contraste de moyens élastiques (30), de manière à être mobile dans un sens sensiblement radial vers et en provenance du corps en forme de cloche (25), **caractérisé en ce qu'**il comporte un élément en forme de champignon (35) associé au disque (23) et placé en correspondance avec une extrémité opposée (28) de la masse (24), ledit élément en forme de champignon (35) ayant une tige (36) étendue parallèlement au pivot (29) et une tête (37) tenant lieu d'épaulement axiale (37") pour la masse (24).

2. Appareil selon la revendication 1, **caractérisé en ce qu'**il comporte une fente (38) formée en correspondance avec ladite extrémité opposée (28) de la masse (24), traversée par ladite tige (36).

3. Appareil selon la revendication 2, **caractérisé en ce que** ladite fente (38) a des extrémités opposées (39, 40) en une telle relation espacée prédéterminée de sorte à délimiter le déplacement angulaire de la masse (24).

4. Appareil selon la revendication 3, **caractérisé en ce que** ladite fente (38) a une extrémité (40) tenant lieu de butée de fin de course du déplacement angulaire de la masse (24) sous l'action de la force centrifuge.

5. Appareil selon la revendication 4, **caractérisé en ce que** ladite fente (38) a une extrémité (39) tenant lieu de butée de fin de course du déplacement angulaire de la masse (24) sous l'action des moyens élastiques (30).

6. Appareil selon la revendication 1, **caractérisé en ce que** ledit élément en forme de champignon (35) est réalisé à partir d'un boulon (46) ayant une tête (47) et étant serré sur une douille d'écartement (49).

7. Appareil selon la revendication 6, **caractérisé en ce que** ledit élément en forme de champignon (35) comporte une rondelle (48) d'un diamètre surélevé prédéterminé étant serrée entre la tête du boulon (46) et la douille d'écartement (49), dans lequel la rondelle (48) définit une face (23') du disque (23).

8. Appareil selon la revendication 7, **caractérisé en ce que** ledit élément en forme de champignon (35) comporte une autre rondelle (50) définissant ledit épaulement axial (37").

9. Appareil selon la revendication 8, **caractérisé en ce que** lesdites rondelles (48, 50) sont réalisées en un matériau antifriction et résistant aux chocs.
